# EUROPEAN PATENT SPECIFICATION

(11) **EP 0 797 025 B1**
(45) Date of publication and mention of the grant of the patent: **10.10.2001**
(21) Application number: 97200752.0
(22) Date of filing: 13.03.1997
(51) Int. Cl.: F16H 3/00, F16H 3/093, B60K 41/22

(54) **Under-load change-speed gear unit with double clutch**
Unter Last schaltbare Getriebeeinheit mit Doppelkupplung
Transmission à changement de vitesse sous charge avec embrayage double

(30) Priority: 21.03.1996 IT RE960021
(43) Date of publication of application: 24.09.1997
(73) Proprietor: LANDINI SpA, I-42042 Fabbrico (Emilia) (IT)
(72) Inventor: Roccatello, Umberto, 42042 Fabbrico (Reggio Emilia) (IT); Benassi, Claudio, 41037 Mirandola (Modena) (IT); Negri, Ettore, 42010 Villarotta di Luzzara (R. Emilia) (IT); Poli, Paolo, 42100 Reggio Emilia (IT)
(74) Representative: Corradini, Corrado

(56) References cited:
- DE-A- 3 621 545
- FR-E- 88 466
- GB-A- 2 069 635
- GB-A- 2 110 324
- US-A- 3 377 876

## Description

This patent relates to change-speed gear units for agricultural tractors.

A characteristic of this type of machine is that, while changing the transmission ratios, the transmitted power must not be interrupted otherwise the machine stops.

In this respect, such machines are coupled to working means which absorb considerable power, and have an operating speed related to the relatively low running speed of the machine, which means that they have substantially zero headway inertia.

Consequently said machines generally start, run and work with the gear unit set to the same transmission ratio, which ratio cannot be changed by manoeuvring the gear unit during travel.

The gear unit of such machines is generally provided with a large number of transmission ratios, very close to each other, both in forward travel and in reverse, and it would therefore be advantageous to be able to adjust the operating speed of the machine while this is running by passing to the next more convenient ratio.

The problem of changing the transmission ratio without causing the machine to stop has been solved by so-called under-load gear units using clutches.

Generally these gear units associate a clutch with each pair of gearwheels, of which one is a driven gearwheel and the other a drive gear, to enable the pair to be engaged while under load.

However the large number of ratios required in agricultural tractors implies the use of a large number of clutches, generally of oil bath type, leading to problems of high power absorption when the clutches are disengaged.

In a system alternative to under-load gear units with clutches, the drive shaft or motion input shaft is connected, via two clutches rigid with it, to two additional shafts in the form of hollow shafts mounted on the drive shaft.

Each of these hollow shafts can carry a pair of idle gearwheels which can be connected to them by frontal clutch couplings.

Said system is applied only to four-ratio change-speed gear units, in which the motion input shaft carries tow hollow shafts, each of which carries a pair of idle gearwheels.

The two idle gearwheels of each of said pairs can selectively be made rigid with the hollow shaft by the known frontal engagement system.

Two clutch units positioned at the ends of the drive shaft connect these latter to either one or other of said hollow shafts.

When the clutch of one of the hollow shafts, for example that carrying the 1st ratio gearwheel in the active position, the clutch between the drive shaft and the other hollow shaft is disengaged, this latter carrying the 2nd ratio gearwheel also in the active position.

As the clutch is disengaged, the second hollow shaft can rotate freely relative to the drive shaft, entrained by the 2nd ratio gearwheel via the motion output shaft.

When the gear lever is operated to pass from 1st to 2nd gear, the clutch of the second hollow shaft becomes progressively engaged while simultaneously that of the first hollow shaft is disengaged, and the power transmitted by the drive shaft is transferred progressively to the second hollow shaft without being interrupted.

When the clutch of the 1st hollow shaft is disengaged, the gearwheel relative to the 3rd ratio transmission ratio can be put into the active position, and so on.

Said known system is not free of drawbacks, which as stated limit its use to four-ratio change-speed gear units.

In this respect, the principle of operation of the aforedescribed gear unit provides for each pair of drive gearwheels to be served by one clutch, and though it might appear that it could also be applied to change-speed gear units with more than four transmission ratios, this is in fact prevented by practical reasons relating to both the considerable length of the gear unit in the axial direction and to the considerable energy usage of the oil-bath clutches, when these are disengaged, due to internal friction.

If account is also taken of the axial length of these devices, it is apparent why the problem of double clutch gear units with more than four transmission ratios, in particular for agricultural tractors, has not yet found a practical solution.

Another system is known wherein the change-speed gear unit (see for example FR 88 466E), comprises a motion input shaft which by means of permanently engaged gearwheels operates two parallel shafts of two respective friction clutches. The friction clutches are for connecting second shafts which are the drive shafts of the gear unit, each carrying free-mounted pairs of gearwheels, with relative frontal clutch coupling for locking one or other gearwheel of each pair to the respective shaft, the gearwheels mounted free on the drive shafts being always in engagement with respective gearwheels fixedly mounted on a single common motion output shaft and means being provided for simultaneously operating said first and second friction clutch in phase opposition.

The object of the present invention is to improve this above cited system in order to provide a change speed gear system in which torque transmission is not interrupted in passing from one transmission ratio to another, and which comprises a large number of transmission ratios, and also a motion reversal device for reverse travel.

This object is attained by a double clutch type powershift change-speed gear unit as claimed in the claims.

The merits and constructional and operational characteristics of the invention will be apparent from the ensuing detailed description of two preferred but non-limiting embodiments thereof illustrated on the accompanying drawings, in which:
Figure 1 is a scheme of a first embodiment of the invention;
Figure 2 is a scheme of a second embodiment of the invention;
Figures 3 to 10 illustrate the various transmission methods of the invention shown in Figure 2;
Figure 11 shows the constructional scheme of that illustrated in

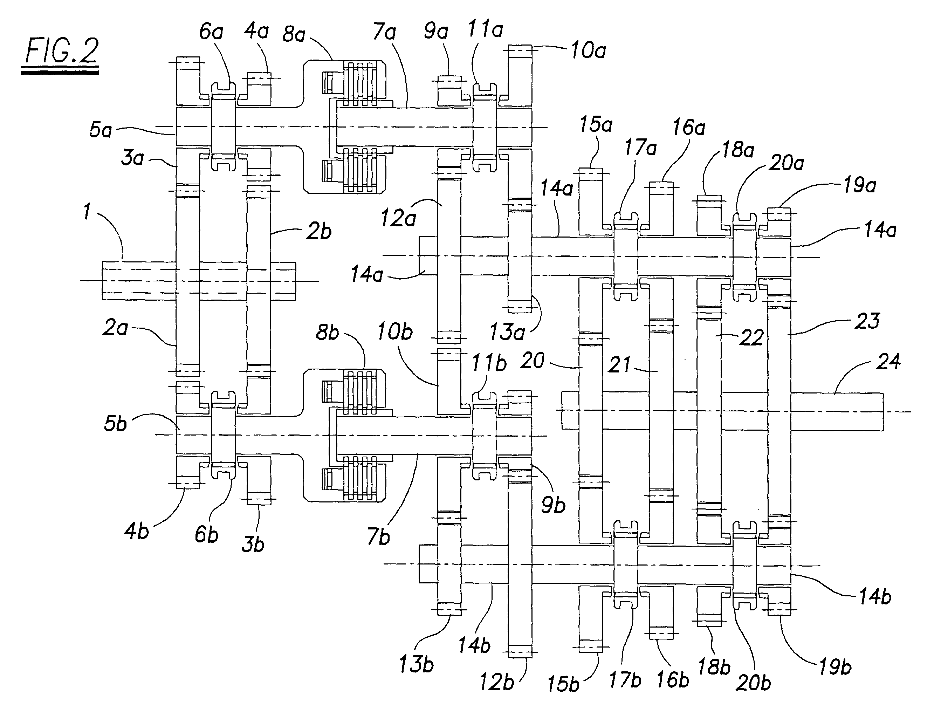

Figures 2 to 10, seen from above and extended in one plane;

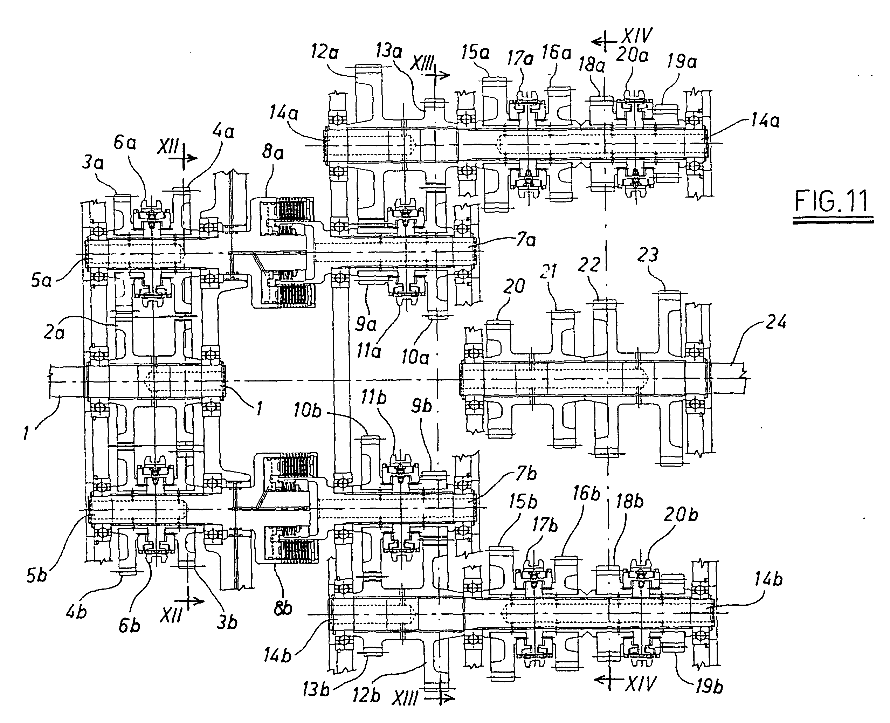

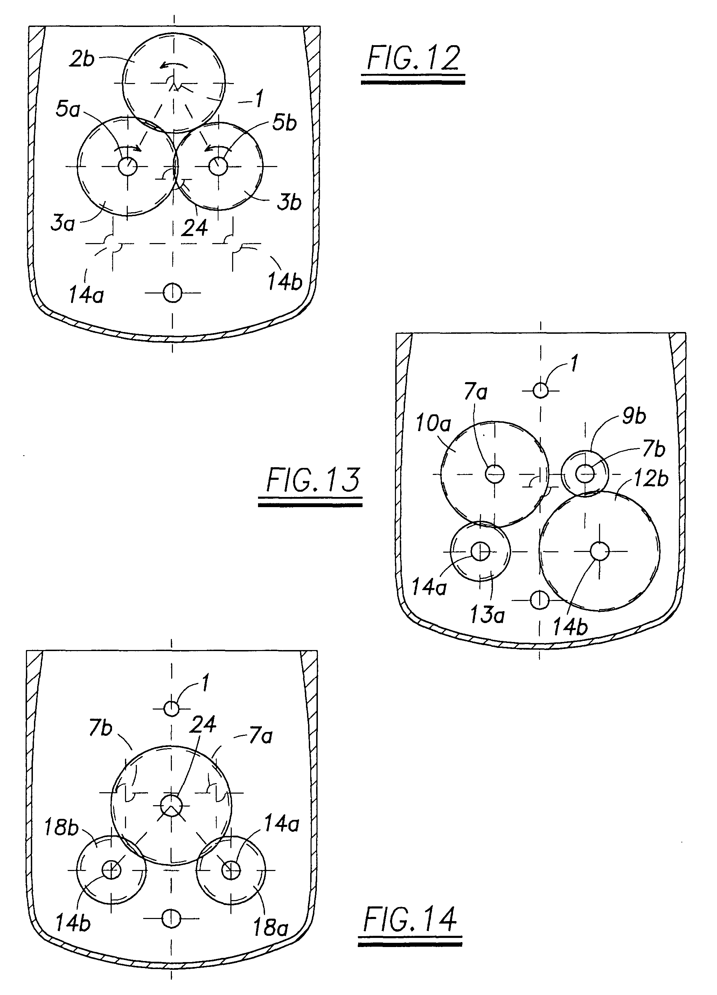

Figure 12 is a section on the line XII-XII of Figure 11;
Figure 13 is a section on the line XIII-XIII of Figure 11;
Figure 14 is a section on the line XIV-XIV of Figure 11.

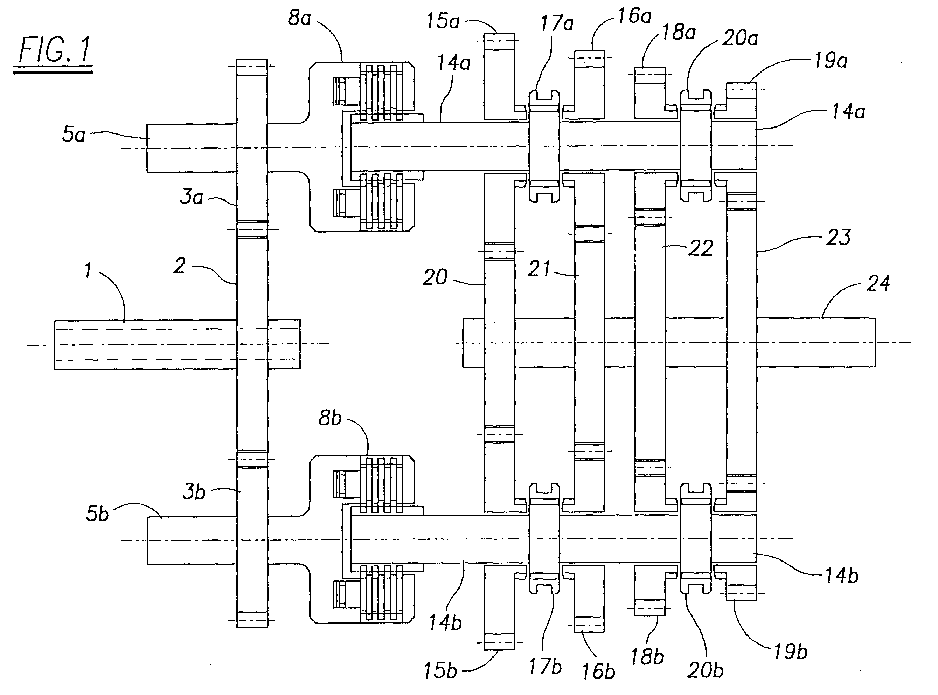

Figure 1 shows the motion input shaft 1 on which the gearwheel 2 is fixedly mounted.

The gearwheel 2 is always engaged with the gearwheels 3a and 3b, which are fixedly mounted respectively on the first shafts 5a and 5b of two friction clutches 8a and 8b.

Said clutches respectively comprise second shafts 14a and 14b, operating as the drive shafts of the change-speed gear unit. The two second shafts 14a and 14b are selectively connected respectively to the first shafts 5a and 5b by the respective clutches 8a and 8b.

The drive shaft 14a carries two pairs of idle gearwheels, respectively 15a, 16a separated by the respective frontal clutch coupling 17a, and 18a, 19a separated by the respective frontal clutch coupling 20a.

The gearwheels 15a, 16a, 18a and 19a are always engaged with the gearwheels 20, 21, 22 and 23 of the output shaft 24.

The second drive shaft 14b carries two pairs of idle gearwheels, respectively 15b, 16b separated by the respective frontal clutch coupling 17b, and 18b, 19b separated by the respective frontal clutch coupling 20b.

The gearwheels 15b, 16b, 18b and 19b are always engaged with the gearwheels 20, 21, 22 and 23 of the common output shaft 24.

Figures 2 to 14 show the gear unit input shaft, always engaged with the engine, which carries two identical drive gearwheels 2a and 2b.

These directly engage respectively with two driven gearwheels 3a and 3b, which directly engage with two further gearwheels 4a and 4b respectively.

The gearwheels 3a and 4a are mounted idly on a first shaft 5a of a first friction clutch 8a, but can be torsionally constrained to it by moving the frontal clutch coupling 6a to the right or left.

Likewise, the gearwheels 3b and 4b are mounted on a first shaft 5b of a second friction clutch 8b, and are constrained thereto by moving the frontal clutch coupling 6b.

The shaft 5a is aligned with the second shaft 7a of the first friction clutch 8a.

Likewise the shaft 8b is aligned with the second shaft 7b and connected to it by the second oil-bath clutch 8b.

The two second shafts 7a and 7b can be selectively connected respectively to the first shafts 5a and 5b of the respective clutches 8a and 8b.

Gearwheels 9a and 10a are idly mounted on the shaft 7a and are separated by the torsionally constraining frontal clutch coupling 11a.

The gearwheels 9a and 10a are always engaged with the gearwheels 12a and 13a fixed on the first drive shaft 14a.

This latter carries two pairs of idle gearwheels, respectively 15a, 16a separated by the respective frontal clutch coupling 17a, and 18a, 19a separated by the respective frontal clutch coupling 20a.

The gearwheels 15a, 16a, 18a and 19a always engage the gearwheels 20, 21, 22 and 23 of the output shaft.

Gearwheels 9b and 10b are idly mounted on the shaft 7b, and are separated by the torsionally constraining frontal clutch coupling 11b.

The gearwheels 9b and 10b are always engaged with the gearwheels 12b and 13b, which are fixed on the second drive shaft 14b.

This latter carries two pairs of idle gearwheels, respectively 15b, 16b separated by the respective frontal clutch coupling 17b, and 18b, 19b separated by the respective frontal clutch coupling 20b.

The gearwheels 15b, 16b, 18b and 19b always engage the gearwheels 20, 21, 22 and 23 of the common output shaft 24.

The aforedescribed second embodiment of the invention is shown simplified in Figure 2 to make the understanding of its operation easier.

From the constructional viewpoint the invention will be more apparent with the aid of Figures 11 to 14.

Said figures use the same reference numerals as the preceding figures.

The coordinated operating means for the various frontal clutch couplings have not been described in detail, they being implemented by usual servo-mechanisms which are required to operate in respect of the following procedure.

Passage from one transmission ratio to the other involves the following operations:
- the coupling which locks the gearwheel of the new ratio onto its shaft is firstly operated;
- simultaneously, the clutch by which motion is transmitted to the shaft relative to the old ratio is disengaged, and the clutch which transmits motion to the shaft relative to the new ratio is engaged;
- the coupling which releases the old ratio from the respective shaft is preferably operated.

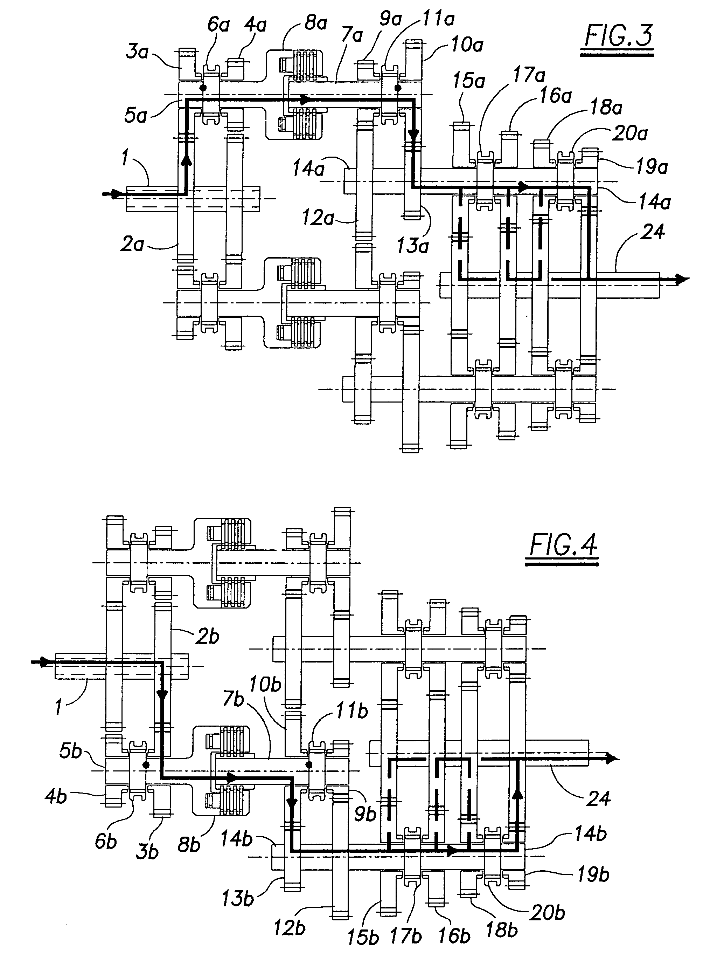

Figures 3 to 10 show the paths of motion, ie the members linked together, in the various configurations of the gear unit, namely:
Figure 3 - 1st, 3rd, 5th, 7th fast forward gears;
Figure 4 - 2nd, 4th, 6th, 8th fast forward gears;

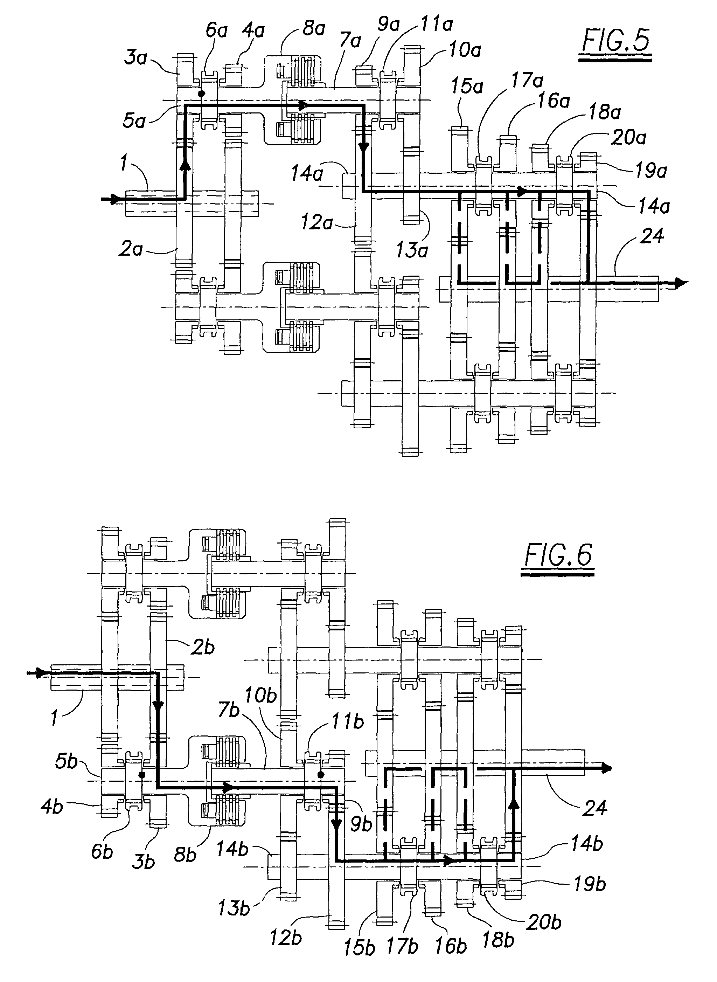

Figure 5 - 1st, 3rd, 5th, 7th slow forward gears;
Figure 6 - 2nd, 4th, 6th, 8th slow forward gears;

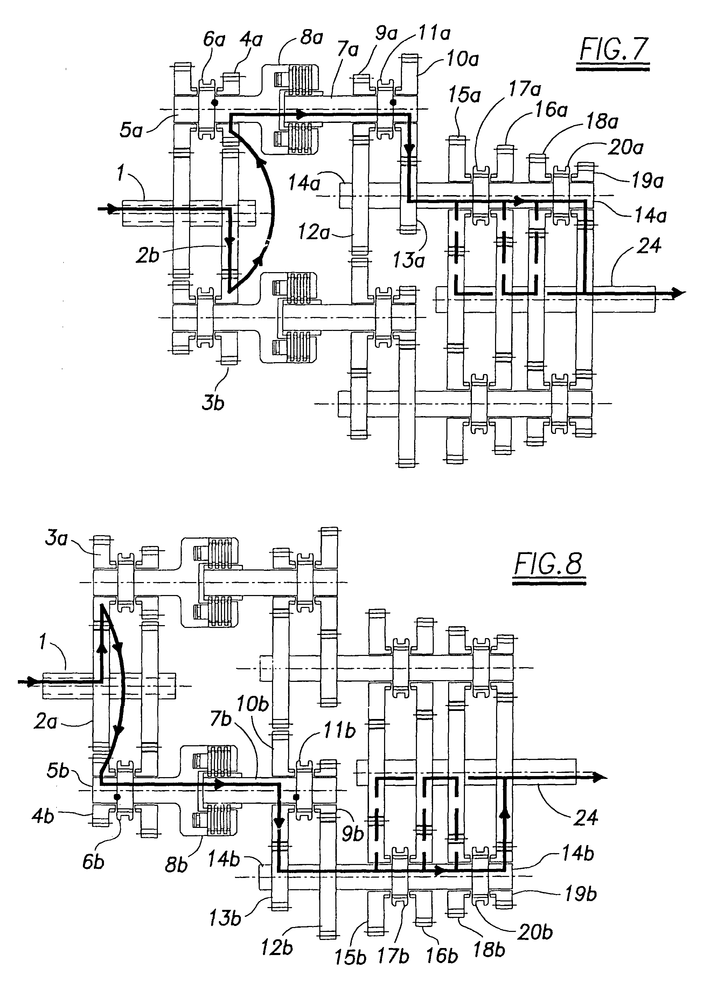

Figure 7 - 1st, 3rd, 5th, 7th fast reverse gears;
Figure 8 - 2nd, 4th, 6th, 8th fast reverse gears;

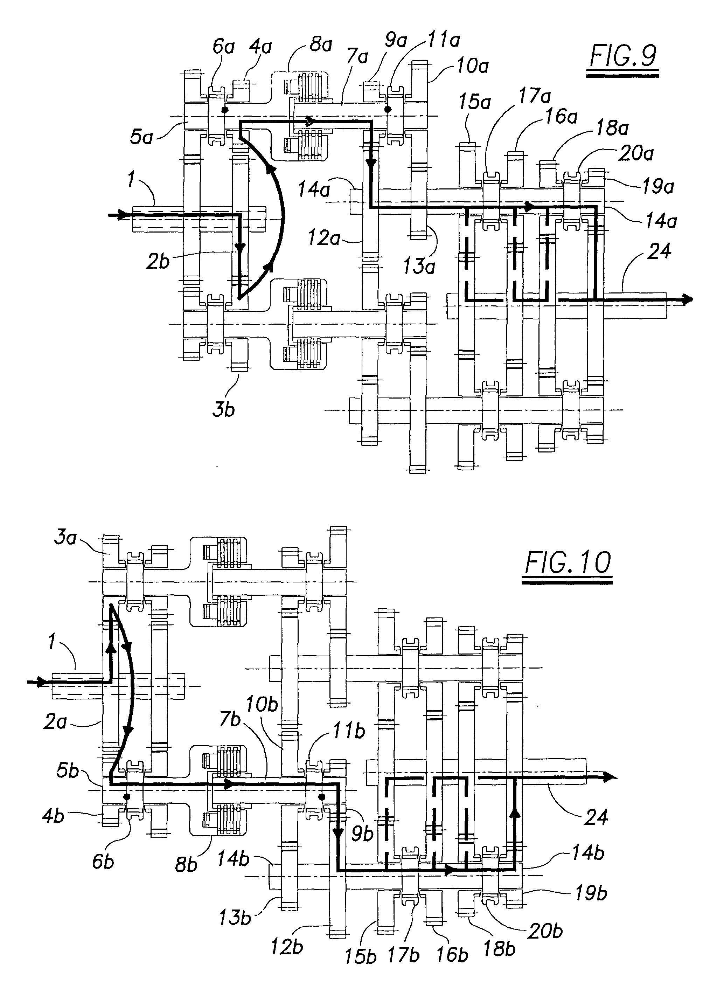

Figure 9 - 1st, 3rd, 5th, 7th slow reverse gears;
Figure 10- 2nd, 4th, 6th, 8th slow reverse gears.

## Claims

1. A double clutch type powershift change-speed gear unit comprising:
- a motion input shaft (1) on which a first and a second input gearwheel (2a,2b) are fixed so as to rotate therewith,
- each of said first and second input gearwheel (2a) permanently engaging an associated gearwheel (3a and 3b) mounted on a respective first and second shaft (5a and 5b) parallel said input shaft,
- each of said first and second parallel shafts carrying a respective first and second friction clutch (8a and 8b),
- said first and second friction clutches (8a and 8b) alternately connecting said first and second parallel shaft (5a and 5b) to a respective first and second drive shaft (14a and 14b),
- each of said first and second drive shafts (14a and 14b) carrying at least one freely mounted pair of drive gearwheels (9a,10a;15a,16a;18a,19a and 9b,10b;15b,16b; 18b,19b) and an associated frontal clutch (11a;17a;20a and 11b;17b; 20b) to lock one or the other gearwheel (9a or 10a;15a or 16a;18a or 19a; 9b or 10b; 15b or 16b; 18b or 19b) of each pair of said drive gearwheels to said respective first and second drive shafts (14a and 14b),
- each gearwheel of said freely mounted pair of drive gearwheels being always in engagement with a respective output gearwheel (20-23) fixedly mounted on a single common motion output shaft (24) so as to rotate therewith, and
- means being provided simultaneously operating said first and second friction clutches (8a and 8b) in phase opposition, **characterised in that**
- said one gearwheel (3a) and another gearwheel (4a) both freely mounted on said first parallel shaft (5a) form part of a first pair of gearwheels (3a,4a),
- said one gearwheel (3b) and another gearwheel (4b) both freely mounted on said second parallel shaft (5b) form part of a second pair of gearwheels (3b,4b),
- said other gearwheel (4a) of said first pair of gearwheels (3a,4a) permanently being engaged with said one gearwheel (3b) mounted on said second parallel shaft (5b),
- the other gearwheel (4b) of said second pair of gearwheels (3b,4b) permanently being engaged with said one gearwheel (3a) mounted on said first parallel shaft (5a),
- a respective slidable frontal clutch (6a,6b) being provided on each of said first and second parallel shafts (5a,5b) to lock either the one or the other gear wheel (3a or 4a or 3b or 4b) of each pair of gearwheels to its respective parallel shaft (5a or 5b).

2. The double clutch type powershift change-speed gear unit as claimed in claim 1, **characterised in that** each of said first and second drive shafts (14a and 14b) are connected by a geared transmission to two further shafts (7a and 7b) parallel to them and which are connected via said first and second friction clutches (8a and 8b) to said first and second parallel shaft (5a and 5b).

3. A gear unit as claimed in claim 2, **characterised in that** each of said two further shafts (7a,7b) carries a pair of freely mounted gearwheels (9a, 10a and 9b, 10b) which are always engaged with corresponding gearwheels (12a, 13a and 12b, 13b) fixedly mounted on said drive shafts, a respective frontal clutch (11a and 11b) being provided to lock one or other of the gearwheels to their respective further shafts.

## Patentansprüche

1. Schaltgetriebe mit Gangschaltung mit doppelter Kupplung, die aus den folgenden Teilen besteht:
- eine Eingangstriebwelle (1), auf der ein erstes und ein zweites Eingangsgetriebe (2a, 2b) aufgezogen sind, die sich zusammen mit ihm drehen;
- jedes dieser ersten und zweiten Eingangsgetriebe (2a) ist in ständigem Eingriff mit einem entsprechenden Getrieberad (3a, 3b), das wiederum auf einer ersten und zweiten Welle (5a, 5b), die parallel zur o.g. Eingangswelle liegt, aufmontiert ist;
- die beiden o.g. ersten und zweiten Parallelwellen sind Teil einer ersten und zweiten Reibkupplung (8a, 8b) ;
- diese beiden Reibkupplungen (8a, 8b) haben die Aufgabe, die erste und zweite Parallelwelle (5a, 5b) abwechselnd mit einer ersten und zweiten Antriebswelle (14a, 14b) zu verbinden;
- jede dieser o.g. ersten und zweiten Antriebswelle (14a, 14b) sind mit mindestens einem Leerlaufgetriebepaar (9a, 10a; 15a, 16a; 18a, 19a und 9b, 10b; 15b, 16b; 18b, 19b) und einer entsprechenden frontalen Schaltkupplung (11a; 17a; 20a und 11b; 17b; 20b) ausgerüstet, die das eine bzw. andere Getrieberad (9a oder 10a; 15a oder 16a; 18a oder 19a; 9b oder 10b; 15b oder 16b; 18b oder 19b) eines jeden o.g. Getriebepaares mit der entsprechenden ersten und zweiten Antriebswelle der o.g. ersten und zweiten Antriebswelle (14a, 14b) verbindet;
- jedes Getrieberad des o.g. Leerlaufgetriebepaares ist in ständigem Eingriff mit einem Ausgangsgetriebe (20-23) verbunden, das auf einer gemeinsamen Ausgangstriebwelle (24) aus Gusseisen aufgezogen ist und sich zusammen mit ihr dreht;
- es sind Bewegungselemente vorgesehen, die die o.g. erste und zweite Reibkupplung in Phasenopposition antreiben, die sich folgendermaßen auszeichnet:
- das o.g. Getrieberad (3a) und ein weiteres Getrieberad (4a) sind leerlaufend auf der o.g. ersten Parallelwelle (5a) befestigt und sind Teil eines ersten Getriebepaares (3a, 4a) ;
- das o.g. Getrieberad (3b) und ein weiteres Getrieberad (4b) sind leerlaufend auf der o.g. zweiten Parallelwelle (5b) befestigt und sind Teil eines zweiten Getriebepaares (3b, 4b) ;
- dieses andere Getrieberad (4a) des o.g. ersten Getriebepaares (3a,4a) ist in ständigem Eingriff mit dem einen o.g. Getrieberad (3b), das auf der o.g. zweiten Parallelwelle (5b) sitzt;
- das andere Getrieberad (4b) des o.g. zweiten Getriebepaares (3b, 4b) steht in ständigem Eingriff mit dem einen o.g. Getrieberad (3a), das auf der o.g. ersten Parallelwelle (5a) sitzt;
- auf jeder der o.g. ersten und zweiten Parallelwellen (5a, 5b) ist eine entsprechende frontale Rutschkupplung (6a, 6b) vorgesehen, die das eine bzw. das andere Getrieberad (3a oder 4a, oder 3b oder 4b) eines jeden Getriebepaares mit der dazu gehörigen Parallelwelle (5a oder 5b) verbindet.

2. Schaltgetriebe mit Gangschaltung mit doppelter Kupplung wie im Patentanspruch 1 beschrieben, das sich dadurch auszeichnet, dass die o.g. ersten und zweiten Antriebswellen (14a, 14b) über ein Zahnradgetriebe mit weiteren zwei Wellen (7a und 7b) verbunden sind, die parallel zu ihnen liegen und die ihrerseits über die o.g. erste und zweite Reibkupplung (8a, 8b) mit der o.g. ersten und zweiten Parallelwelle (5a, 5b) verbunden sind.

3. Schaltgetriebe wie im Patentanspruch 2, das sich dadurch auszeichnet, dass jede der beiden o.g. zusätzlichen Wellen (7a, 7b) mit einem Leerlaufgetriebepaar (9a, 10a und 9b, 10b) ausgestattet ist, die in ständigem Eingriff mit den entsprechenden Getrieberädern (12a, 13a und 12b, 13b) stehen, die auf den o.g. Antriebswellen sitzen, eine frontale Kupplung (11a und 11b) ist dafür vorgesehen, das eine bzw. andere Getrieberad mit der dazu gehörigen Welle zu verbinden.

## Revendications

1. Groupe changement de vitesse à sélection des rapports à double embrayage, comprenant:
- un arbre (1) d'arrivée du mouvement sur lequel sont fixés un premier et un deuxième engrange d'arrivée (2a, 2b) solidaires de l'arbre en rotation.
- le premier et le deuxième d'arrivée (2a) étant constamment en prise sur un engrenage (3a, 3b) monté sur un premier et un deuxième arbre (5a, 5b) parallèle à l'arrivée.
- le premier et le deuxième arbre parallèle sont actionnés respectivement par un premier et un deuxième enclenchement à friction (8a, 8b) ;
- le premier et le deuxième enclenchement à friction (8a, 8b) ont pour fonction de raccorder respectivement le premier et le deuxième arbre parallèle (5a, 5b) à un premier et un deuxième arbre moteur (14a, 14b).
- le premier et le deuxième arbre moteur (14a, 14b) sont pourvus d'au moins une paire d'engrenage moteurs fous (9a, 10a; 15a, 16a; 18a, 19a e 9b, 10b; 15b, 16b; 18b, 19b) et d'un enclenchement frontal correspondant (11a; 17a; 20a e 11b; 17b; 20b) dont la fonction est d'engager l'un ou autre des engrenages (9a o 10a; 15a o 16a; 18a o 19a; 9b o 10b; 15b o 16b; 18b o19b) de chaque paire des engrenages moteurs sur le premier et le deuxième arbres moteurs (14a, 14b).
- chaque engrenage de cette paire d'engrenages moteurs fous sont constamment en prise avec un engrenage correspondant de sortie (20-23) fixé sur un unique arbre commun de sortie du mouvement (24) de façon à tourner avec celui-ci.
- sont prévus des organes pour actionner simultanément, en phase d'opposition, le premier et le deuxième enclenchement à friction (8a, 8b) ; les caractéristiques sont les suivantes:
- l'engrenage (3a) et un autre engrenage (4a), fous et montés sur le premier arbre parallèle (5a) font partie d'une première paire d'engrenages (3a, 4a).
- l'engrenage (3b) et un autres engrenage (4b), fous et montés sur le deuxième arbre parallèle (5b) font partie d'une deuxième paire d'engrenages (3b, 4b).
- l'engrenage (4a) de la première paire d'engrenage (3a, 4a) est constamment en prise avec l'engrenage (3b) monté sur le deuxième arbre parallèle (5b).
- l'engrenage (4b) de la deuxième paire d'engrenage (3b, 4b) est constamment en prise avec l'engrenage (3a) monté sur le premier arbre parallèle (5a).
- sur le premier et le deuxième arbre parallèle (5a, 5b) est prévu un enclenchement frontal à coulissement (6a, 6b) servant à maintenir en prise l'un ou l'autre engrenage (3a ou 4a, ou 3b ou 4b) de chaque paire d'engrenages sur son propre arbre moteur (5a ou 5b).

2. Groupe de changement de vitesse à sélection des rapports à double friction selon la revendication 1, **caractérisé par** le fait que le premier et le deuxième arbre moteur (14a, 14b) sont reliés, par l'intermédiaire d'une transmission à engrenages, à deux autres arbres (7a et 7b) parallèles aux premiers et raccordés, par l'intermédiaire du premier et du deuxième enclenchement à friction (8a, 8b) au premier et au deuxième arbre parallèles (5a, 5b).

3. Groupe de changement de vitesse selon la revendication 2, **caractérisé par** le fait que chacun des deux autres arbres (7a, 7b) est pourvu d'une paire d'engrenages fous (9a, 10a e 9b, 10b) constamment en prise sur les engrenages correspondants (12a, 13a et 12b, 13b) fixés aux arbres moteurs, étant prévu un enclenchement frontal (11a et 11b) ayant pour fonction de maintenir en prise sur l'arbre correspondant l'un ou l'autre des engrenages.
